# EUROPÄISCHE PATENTSCHRIFT

(11) **EP 1 711 447 B1**
(45) Veröffentlichungstag und Bekanntmachung des Hinweises auf die Patenterteilung: **08.08.2012**
(21) Anmeldenummer: 05700956.5
(22) Anmeldetag: 15.01.2005
(51) Int. Cl.: C05G 3/00, B01J 2/04, C05C 9/00

(54) **VERMINDERUNG VON BIURET UND FREIEM AMMONIAK BEI EINEM VERFAHREN ZUR HERSTELLUNG HARNSTOFFHALTIGEN DÜNGEMITTELGRANULATS**
REDUCTION OF BIURET AND FREE AMMONIA DURING A METHOD FOR PRODUCING FERTILISER GRANULATES CONTAINING UREA
REDUCTION DE BIURET ET D'AMMONIAC LIBRE AU COURS D'UN PROCEDE POUR PRODUIRE DES GRANULES DE SUBSTANCE FERTILISANTE CONTENANT DE L'UREE

(30) Priorität: 05.02.2004 DE 102004005907
(43) Veröffentlichungstag der Anmeldung: 18.10.2006
(73) Patentinhaber: ThyssenKrupp Uhde GmbH, 44141 Dortmund (DE)
(72) Erfinder: LEOPOLD, Eugen, 44289 Dortmund (DE)
(86) Internationale Anmeldenummer: PCT/EP2005/000367
(87) Internationale Veröffentlichungsnummer: WO 2005/075383

(56) Entgegenhaltungen:
- EP-A- 0 908 430
- DE-A1- 2 825 039
- US-A- 5 965 071
- US-B1- 6 179 893

## Beschreibung

Die Erfindung betrifft ein Verfahren zur Herstellung von harnstoffhaltigem Düngemittel mittels einer Synthesestufe, einer Eindampfung und einer Granulationseinheit, bei welchem zur Verringerung der Verweilzeit und Optimierung der Aufstellung der Verfahrenskomponenten für die Förderung des Produktstroms von der Eindampfung zur Granulationseinheit eine selbstregulierende Kreiselpumpe eingesetzt wird.

Verfahren zur Herstellung von granulierten Düngemitteln sind in der Fach- und Patentliteratur weitreichend beschrieben, wobei exemplarisch US 6,203,730 B1 , DE 28 25 039 B2 und US 4,943,308 A hier genannt seien. Üblicherweise wird der als Schmelze oder Lösung vorliegende und aus der Synthesestufe kommende Produktstrom zur Einstellung des Wassergehaltes einem Verdampfer zugeführt und anschließend in die Granulationsstufe geleitet. In einigen Verfahren aus dem Stand der Technik findet vor der Einleitung in den Granulator eine Vermischung mit einem Anteil festen Feinkorns statt, welcher in der Regel rezykliertes Granulat ist.

Bei Produktionsmengen von 1500 x 10³ kg pro Tag und mehr ist die optimale Aufstellung der einzelnen Verfahrenskomponenten eine ganz entscheidende Einflussgröße hinsichtlich der Funktionalität und Wirtschaftlichkeit des Gesamtverfahrens. Wichtig hierbei ist, dass flüssige und feste Medien nach Möglichkeit mittels Schwerkraft ohne zusätzliche Fördereinrichtungen bewegt werden. Die Aufstellung des Granulators, dem größten Bauteil neben dem Synthesereaktor in diesem Verfahren, bestimmt die Anordnung der sonstigen Komponenten und erfolgt üblicherweise in einer Höhe von 8 m bis 15 m. Auf diese Weise kann das fertige Granulat die nachfolgenden und tiefer liegenden Vorrichtungen ohne Förderaggregat erreichen. Weiterhin kann beispielsweise die regelmäßig in großen Mengen anfallende Spülflüssigkeit über einen freien Ablauf direkt unterhalb des Granulators aufgefangen werden.

Der in die Granulation führende Produktstrom wird mittels einer Kreiselpumpe gefördert, welche in der Prozessfolge nachfolgend und einige Meter unterhalb der Verdampfereinheit angeordnet ist. Die Verdampfereinheit stellt hierbei durch die erhöhte Anordnung den barometrischen Abschluss für die Kreiselpumpe dar und sichert somit den erforderlichen Pumpenvordruck. Nachteilig an dieser Aufstellung sind das Erfordernis einer hohen Bühne für ein sehr großes und schweres Bauteil und die damit verbundenen Leitungswege, welche die Verweilzeit des Produktstroms in ungünstiger Weise verlängern. Weiterhin müssen diese Leitungen aufwändig isoliert und begleitbeheizt werden, um Anbackungen an den Rohrwänden oder Entmischungen zu vermeiden und die hohe Temperatur bis zum endgültigen Trocknungsvorgang im Granulator zu halten.

Es ist aus DE 197 44 404 bekannt, dass abhängig von der Temperatur und von der Verweilzeit in der Produktlösung Folgereaktionen des Urea stattfinden, wobei sich im Wesentlichen Polymere und Kondensate des Urea bilden, welche keinen biogenen Wirkeffekt haben und somit die Wirkstoffkonzentration im Korn senken. Neben diesen inaktiven Folgeprodukten bildet sich auch Biuret, welches eine stark phytotoxische Wirkung hat und daher so weit wie möglich unterdrückt werden muss.

Gerade die Konzentration des stark phytotoxischen Biuret in der Harnstofflösung steigt mit steigender Temperatur und Verweilzeit. Die Zusammenhänge der Biuretbildung sind beispielsweise in AT 285621, CH 617 672A oder GB 1 404 098 beschrieben, also über 30 Jahre bekannt.

In der Eindampfung ist es erforderlich, eine Temperatur von 110 °C bis 150 °C einzustellen, um die erforderliche Wassermenge in geeigneter Zeit aus der Produktlösung zu entfernen. Diese hohe Temperatur liegt somit ebenfalls in den nachfolgenden Rohrleitungen vor, welche die Bildung des Biuret stark begünstigt. Somit findet in den sich an die Eindampfung anschließenden Rohrleitungen eine für die Endqualität des Produktes relevante Bildung des Biuret statt, was gegebenenfalls durch eine weitergehende Überhitzung dieser in der Regel mit Dampf beheizten Rohrleitungen noch verstärkt wird.

DE 197 44 404 offenbart ein Verfahren, in welchem durch die Zugabe von Dicyandiamid eine kristallisationshemmende Wirkung eintritt, so dass das Verfahren bei Temperaturen von 70-90°C betrieben werden kann wodurch die Biuret-Bildung stark herabgesetzt wird. Nachteilig an diesem Verfahren ist der hohe Bedarf an nicht biologisch aktivem Dicyandiamid, welches gemäß dem angeführten Beispiel in DE 197 44 404 zu über 5 Gew.-% pro Stunde zugefügt werden muss. Diese Zugabe eines Additivs erfordert ein entsprechend größeres Bauvolumen und steigert in erheblichem Maß die Betriebskosten des Verfahrens.

Weiterhin ist es nachteilig, dass durch den endothermen Lösungsvorgang des Dicyandiamids Energie verbraucht wird, welche zumindest teilweise für die Durchführung des sich anschließenden Trocknungsvorgang im Granulator erneut aufgebracht werden muss.

Eine wichtige Quelle für die Bildung des Biuret ist der Verdampfer, daher schlägt JP 57171956 A eine spezielle Aufkonzentration der Lösung vor, indem der Verdampfer als Sprühturm ausgebildet ist, so dass über die dort erzeugte große Flüssigkeitsoberfläche in der Produktlösung ein sehr schneller und effektiver Wasserentzug erfolgt. Nachteilig an einer derartigen Lösung ist die deutlich aufwändigere Verdampferkonstruktion, welcher weiterhin eine deutlich komplexere Steuer- und Regelungstechnik erfordert.

GB 1 404 098 schlägt ein Verfahren vor, in welchem die Urealösung vor der Granulierung zur Abtrennung des Biuret über einen Ionentauscher geleitet wird. Dieses Verfahren erfordert zusätzliche Prozesskomponenten und ebenfalls höhere Betriebskosten durch die regelmäßig erforderliche Regeneration des lonentauschermaterials.
US 5 965 071 A offenbart ein Verfahren zur Herstellung vom granulösen Harnstoff, wobei eine Vakuumpumpe bei der Verdampfung eingesetzt wird um die Verfahrenstemperatur niedrig wie möglich zu halten.

Die Aufgabe der vorliegenden Erfindung ist es, ein wirtschaftlich günstiges Verfahren zur Verfügung zu stellen, bei welchem die Bildung von Biuret weitergehend gemindert wird.

Die Erfindung ist auf ein Verfahren zur Herstellung von harnstoffhaltigem Düngemittel mittels einer Synthesestufe, einer Eindampfung und einer Granulationseinheit gerichtet, bei welchem zur Verringerung der Verweilzeit die Einleitung der Produktlösung in die Granulationseinheit eine selbstregulierende Kreiselpumpe eingesetzt wird, wie sie beispielsweise in AT 281609 oder AT 291003 beschrieben ist.

Die in AT 281609 oder AT 291003 genannten Pumpen, werden für den Einsatz nicht gleichbleibender Zulaufmengen und geringer Zulaufhöhen beschrieben und sind seit über 30 Jahren bekannt. Der erfindungsgemäße Einsatz im Rahmen einer Düngemittelherstellung hat zur Folge, dass der Verdampfer in derselben Ebene wie der Granulator aufgestellt werden kann und die Kreiselpumpe nur geringfügig tiefer angeordnet werden muss. Damit entfallen bzw. verkürzen sich die Versorgungsleitungen, wodurch die Verweilzeit des Produktes in den Leitungswegen wird entsprechend verkürzt. Diese Verringerung der Verweilzeit führt zu einer Verminderung der Bildung von Neben- und Folgeprodukten in der Produktlösung.

Es zeigte sich überraschenderweise, dass der Einsatz der selbstregelnden Kreiselpumpe weiterhin zu einer Verminderung des freien Ammoniaks im Abgas führt. Freies Ammoniak, welches zum Teil aus der unvollständigen Synthese stammt oder in den nachfolgenden Rohrleitungen und Behandlungsstufen entsteht, wird üblicherweise mit dem Abgas aus dem Verdampfer in die Synthesestufe zurück geführt. Freies Ammoniak, welches sich nach der Eindampfung bildet, muss gemeinsam mit dem Abgas, welches den Granulator verlässt, gereinigt werden. Da durch den Einsatz der selbstregulierenden Kreiselpumpe die Bildung des Biuret vermindert wird, wird auch die Bildung des zweiten Reaktionsproduktes Ammoniak gehindert.

Wie in GB 1 404 098 beschrieben, verläuft die Bildung des Biuret nach der Summenformel 2 OCN₂H₄ ⇔ O₂C₂N₃H₅ + NH₃, so dass pro nicht gebildetes Molekül Biuret ebenfalls die Bildung eines Moleküls NH₃ verhindert wird. Es kann bei dem erfindungsgemäßen Einsatz der selbstregulierenden Pumpe bei der Herstellung eines Ureagranulates eine Verminderung des Ammoniakgehaltes im Abgas von über 10 % erreicht werden gegenüber konventionellen Verfahren.

Weiterhin vereinfacht sich durch den Einsatz der selbstregulierenden Kreiselpumpe der Regelungsaufwand vorrangig für An- und Abfahrvorgänge erheblich, da diese Pumpe aufgrund ihrer Unabhängigkeit von der Zulaufmenge auf der Saugseite die Zulaufbedingungen zum Granulator länger stabil hält. Die Pumpe ermöglicht ein fast völliges Entleeren der Saugleitung, bevor der Zulauf zum Granulator unterbrochen wird. Weiterhin kann nach einem Stillstand schneller wieder im Granulator Produktlösung bereitstellt werden, da die Saugleitung nicht bis zu einem gewissen Füllstand gefüllt werden muss. Somit muss die Produktion von spezifikationsgerechtem Granulat im Verhältnis zum Stand der Technik kürzer unterbrochen werden, was wirtschaftlich vorteilhaft ist.

Ein weiterer Vorteil besteht darin, dass bei Abfahrvorgängen die Saugleitung noch während der Produktion nahezu vollständig entleert wird, so dass eine gesonderte Entleerung und Rückführung der Lösung aus diesem Leitungsabschnitt entfällt.

Vorteilhafter Weise wird die selbstregulierende Pumpe entgegen der Darstellung in AT 281609 oder AT 291003 in unmittelbarer Nähe zum Granulator als an dem nachfolgenden Ausrüstungsteil aufgestellt oder in der idealen Aufstellungsvariante direkt am Granulator angeflanscht. Dies hat den großen Vorteil, dass die bauformbedingte Entgasung der Pumpe beziehungsweise der Produktlösung am Ende der heißen Rohrleitung zwischen Verdampfer und Granulator stattfinden kann. Diese Entgasung erfolgt über die Bohrung in der Welle, welche Verbindung mit dem Gasraum des Verdampfers hat. Dies ist besonders wirkungsvoll bei Verdampfereinheiten, bei denen Temperaturen von über 120°C vorliegen.

In einer weiteren vorteilhaften Ausgestaltung der Erfindung ist die selbstregulierende Förderpumpe räumlich direkt neben dem Verdampfer angeordnet oder an diesen Verdampfer angeflanscht.

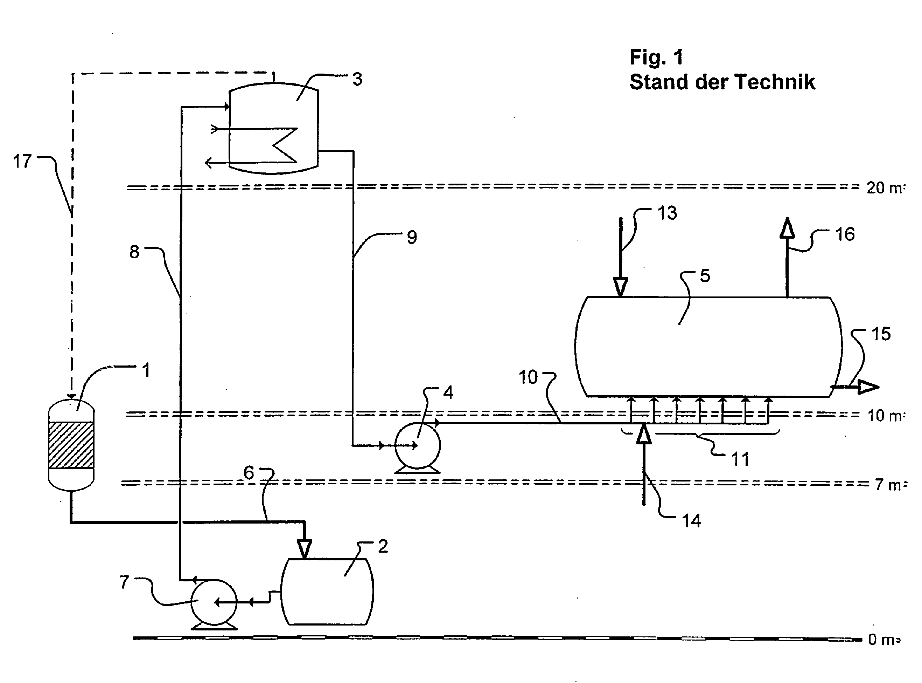

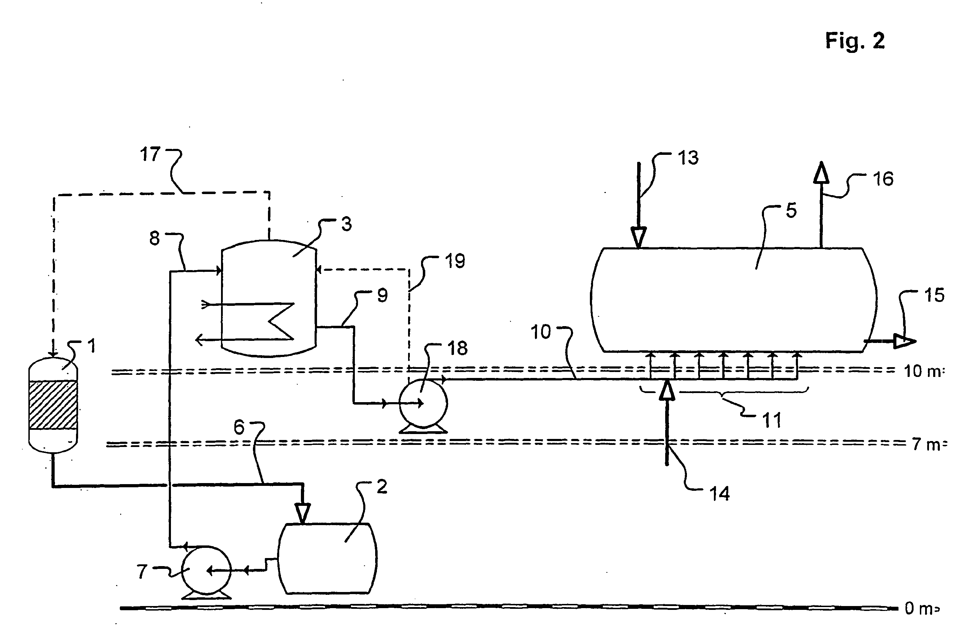

Nachfolgend wird beispielhaft in Fig. 1 der Stand der Technik mit Angaben der Höhen gezeigt. Fig. 2 zeigt beispielhaft die optimierte Aufstellung des Verfahrens unter Einsatz einer selbstregulierenden Kreiselpumpe.

Wie in Fig. 1 zu erkennen, wird das in der Synthesestufe 1 gebildete Produkt über den Leitungsweg 6 in einen Vorlagebehälter 2 geleitet und von dort mittels einer Pumpe 7 in der Leitung 8 von der Bodenebene in den auf der 20m-Bühne stehenden Verdampfer 3 gefördert. Der im Verdampfer 3 ausgetriebene Wasserdampf sowie das freie Ammoniak und andere gasförmige Komponenten werden über den Leitungsweg 17 in die Synthesestufe zurückgeleitet.

Die aufkonzentrierte Urealösung verlässt über den Leitungsweg 9, der Saugleitung der Kreiselpumpe 4, den Verdampfer. Über die Höhendifferenz, welche der Leitungsweg 9 in Fallrichtung überwindet, wird die Einhaltung des erforderlichen Vordrucks beziehungsweise NPSH-Wertes der Kreiselpumpe 4, welche auf einer Höhe von ca. 7m aufgestellt ist, sichergestellt. Im Leitungsweg 10, der Druckleitung dieser Kreiselpumpe 4, wird diese Lösung in das Verteilersystem 11 des Granulators 5 gefördert, wobei der Granulator 5 auf einer Bühnenhöhe von 10m aufgestellt ist. Die Urealösung wird gemeinsam mit einem inerten Trägergas 14 in den Granulator eingedüst. Das feste Granulat verlässt über die Leitung 15 den Granulator zu nicht dargestellten tiefer angeordneten, nachfolgenden Behandlungsstufen und das Abgas aus dem Granulator wird über Leitung 16 in die ebenfalls nicht dargestellte Abgasreinigungseinheit geleitet.

In Fig. 2 ist zu erkennen, dass im Vergleich zum in Fig. 1 dargestellten Stand der Technik keine 20m-Bühne für den Verdampfer 3 vorgesehen , sondern dieser auf einer Ebene mit dem Granulator 5 aufgestellt ist. Die über den Leitungsweg 9 kommende aufkonzentrierte Urealösung wird mittels der selbstregulierenden Kreiselpumpe 18 über den Leitungsweg 10 zum Verteilersystem 11 des Granulators 5 geleitet. Über Leitung 19 ist die Selbstregenlierende Kreiselpumpe 18 Bauart gemäß mit dem Gasraum des Verdampfers 3 verbunden.

In der nachstehende Tabelle ist modellhaft die Verminderung des Biuret bei Verkürzung der Leitungswege durch den erfindungsgemäßen Einsatz einer selbstregulierenden Kreiselpumpe berechnet. Dabei wurde ein Massenstrom von 2000 metrischen Tonnen pro Stunde bei 140°C zugrunde gelegt.

| Tabelle | Einsatz einer Kreiselpumpe gemäß dem Stand der Technik | Erfindungsgemäße Einsatz der selbstregulierenden Kreiselpumpe |
|---|---|---|
| Biuret-Bildung zwischen Verdampfer und Granulator | 85.396 kg/h | 85.370 kg/h (Differenz ca. 0,03%) |
| Ammoniak-Bildung zwischen Verdampfer und Granulator | 34,5 kg/h | 30,27 kg/h (Differenz ca. 12 %) |

## Patentansprüche

1. Verfahren zur Herstellung von stickstoffhaltigem Düngemittel, umfassend im Wesentlichen eine Syntheseeinheit, eine Verdampfereinheit, eine Förderpumpe und eine Granulationseinheit, wobei das Produkt aus der Syntheseeinheit diese in flüssiger Form als wässrige Lösung oder Schmelze verlässt,
**dadurch gekennzeichnet, dass**
der Produktstrom nach der Verdampfereinheit und vor der Granulationseinheit mittels einer selbstregulierenden Kreiselpumpe in Richtung der Granulationseinheit gefördert wird.

2. Verfahren nach Anspruch 1,
**dadurch gekennzeichnet, dass**
die Granulationseinheit einen Granulator umfasst und die selbstregulierende Kreiselpumpe räumlich direkt neben diesem Granulator angeordnet oder an diesen idealerweise angeflanscht ist.

3. Verfahren nach Anspruch 1,
**dadurch gekennzeichnet, dass**
die Verdampfereinheit einen Verdampfer umfasst und die selbstregulierende Kreiselpumpe räumlich direkt neben diesem Verdampfer angeordnet oder an diesen idealerweise angeflanscht ist.

4. Verfahren nach einem der Ansprüche 1 bis 3, **dadurch gekennzeichnet, dass** der Verdampfer und der Granulator im Wesentlichen in der selben horizontalen Ebene über der Bodenebene angeordnet sind.

5. Verfahren nach einem der Ansprüche 1 bis 4, **dadurch gekennzeichnet, dass** die selbstregulierende Kreiselpumpe im Wesentlichen in der selben horizontalen Ebene wie der Verdampfer angeordnet ist.

## Claims

1. Process for the production of nitrogenous fertilizer, essentially comprising a synthesis unit, an evaporation unit, a conveying pump and a granulation unit, the product from the synthesis unit leaving said unit in liquid phase as an aqueous solution or melt,
**characterized in that**
the product stream downstream of the evaporation unit and upstream of the granulation unit is conveyed by means of a self-regulating centrifugal pump in the direction of the granulation unit.

2. Process according to claim 1,
**characterized in that**
the granulation unit comprises a granulator and the self-regulating centrifugal pump is arranged directly adjacent to this granulator or ideally flanged to it.

3. Process according to claim 1,
**characterized in that**
the evaporation unit comprises an evaporator and the self-regulating centrifugal pump is arranged directly adjacent to this evaporator or ideally flanged to it.

4. Process according to one of the preceding claims 1 to 3, **characterized in that** the evaporator and the granulator are arranged essentially at the same horizontal level above the floor level.

5. Process according to one of the preceding claims 1 to 4, **characterized in that** the self-regulating centrifugal pump is arranged essentially at the same horizontal level as that of the evaporator.

## Revendications

1. Procédé de fabrication d'engrais azotés, comprenant essentiellement une unité de synthèse, une unité évaporatoire, une pompe de refoulement et une unité de granulation, le produit sortant de l'unité de synthèse sous forme liquide comme solution aqueuse ou fusion,
**caractérisé en ce que**
le flux de produit est refoulé en direction de l'unité de granulation au moyen d'une pompe centrifuge auto-régulante et ce, en aval de l'unité évaporatoire et en amont de l'unité de granulation.

2. Procédé selon la revendication 1,
**caractérisé en ce que**
l'unité de granulation comprend un granulateur et que la pompe centrifuge auto-régulante est implantée directement à côté dudit granulateur ou est dans l'idéal, bridée dessus.

3. Procédé selon la revendication 1,
**caractérisé en ce que**
l'unité évaporatoire comprend un évaporateur et que la pompe centrifuge auto-régulante est implantée directement à côté dudit évaporateur ou est dans l'idéal, bridée dessus.

4. Procédé selon une des revendications 1 à 3, **caractérisé en ce que** l'évaporateur et le granulateur sont essentiellement implantés sur le même niveau horizontal au-dessus du sol.

5. Procédé selon une des revendications 1 à 4, **caractérisé en ce que** la pompe centrifuge auto-régulante est essentiellement implantée sur le même niveau horizontal que l'évaporateur.
